# EUROPEAN PATENT SPECIFICATION

(11) **EP 3 952 301 B1**
(45) Date of publication and mention of the grant of the patent: **27.08.2025**
(21) Application number: 20794382.0
(22) Date of filing: 24.04.2020
(51) Int. Cl.: H04N 7/14, H04N 21/4788, G06F 3/14

(54) **APPLICATION CONTROL METHOD, AND ELECTRONIC DEVICE**
ANWENDUNGSSTEUERUNGSVERFAHREN UND ELEKTRONISCHE VORRICHTUNG
PROCÉDÉ DE COMMANDE D'APPLICATION, ET DISPOSITIF ÉLECTRONIQUE

(30) Priority: 25.04.2019 CN 201910348608
(43) Date of publication of application: 09.02.2022
(73) Proprietor: Huawei Technologies Co., Ltd., Shenzhen, Guangdong 518129 (CN)
(72) Inventor: HE, Zhen, Shenzhen, Guangdong 518129 (CN); JIN, Qinghao, Shenzhen, Guangdong 518129 (CN); LIAO, Changliang, Shenzhen, Guangdong 518129 (CN)
(74) Representative: Maiwald GmbH
(86) International application number: PCT/CN2020/086814
(87) International publication number: WO 2020/216347

(56) References cited:
- EP-A1- 3 285 133
- CN-A- 105 653 024
- CN-A- 107 770 440
- CN-A- 107 846 515
- CN-A- 110 996 034
- US-A1- 2010 182 265
- US-A1- 2016 048 363

## Description

### TECHNICAL FIELD

The present invention relates to the field of computer technologies, and in particular, to an application control method and an electronic apparatus.

### BACKGROUND

US2016/0048363A1 describes that an information handling system includes a primary integrated display platform and a secondary integrated display platform attached via a hinge, and including a passive cooling system, a dynamic thermal management system, and a processor. It is described that the information handling system further includes an application window locator system for determining a location of a software application display window running on the information handling system on the primary integrated display platform or the secondary integrated display platform.

US2010/0182265A1 describes a mobile terminal having a foldable display and an operation method for the same. It is described that the foldable display unit includes a plurality of display zones, wherein the application of program depends on the degree of folding angle of the display unit, and the display unit displays on its screen according to the folding angle, and that variations of closing and opening motion of the foldable display unit triggers different modes of operation and displays.

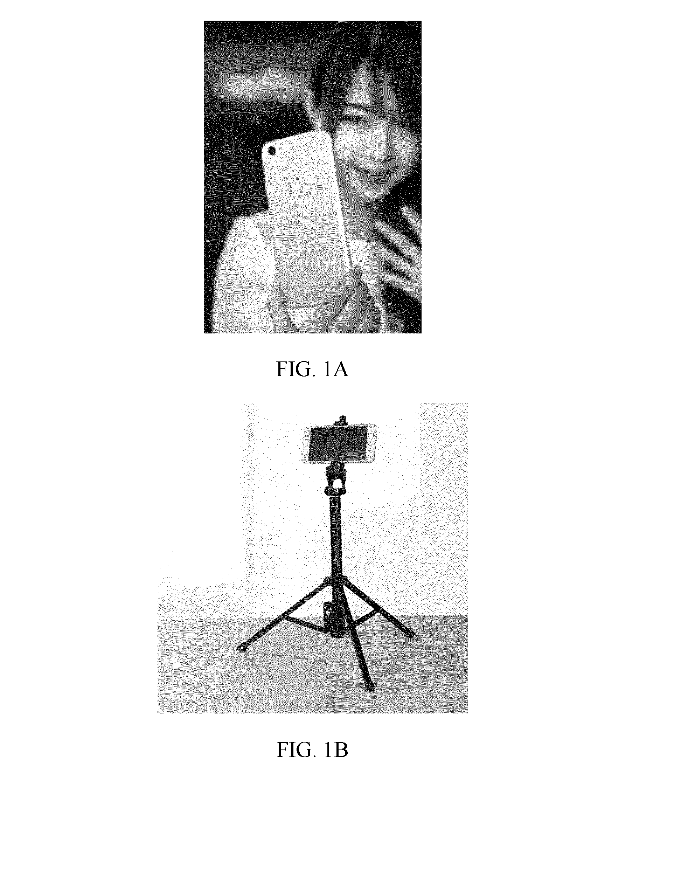

Currently, cameras are disposed on many terminals (such as mobile phones and tablet computers). A user may shoot videos through a camera, to implement functions such as video chat and online live broadcast. Regardless of video chat or online live broadcast, a terminal needs to be placed in a specific posture to provide a better shooting angle for a camera of the terminal. After the terminal is placed in the posture, the terminal needs to be relatively fastened. Currently, common fastening manners include hand-holding-based fastening, holder-based fastening, and the like. FIG. 1A shows a hand-holding-based fastening manner. FIG. 1B shows a holder-based fastening manner. For hand-holding-based fastening, the user needs to hold a mobile phone for a long time (this easily causes fatigue). For holder-based fastening, the user needs to set up a holder in real time (an implementation process is relatively troublesome). Therefore, in a process of performing a shooting task through a camera, how to simplify user operations is a technical problem being studied by persons skilled in the art.

### SUMMARY

Embodiments of the present invention disclose an application control method and an electronic apparatus, so that a user can operate an electronic apparatus more efficiently and conveniently in a scenario in which a camera needs to be used, for example, a video chat scenario or a video live broadcast scenario.

The invention and its scope of protection is defined in the appended independent claims. Claim 1 defines an application control method. Claim 2 defines an application control method. Claim 3 defines an electronic apparatus. Claim 4 defines an electronic apparatus. Claim 5 defines a computer-readable storage medium. Claim 6 defines a computer program product.

### BRIEF DESCRIPTION OF DRAWINGS

Accompanying drawings used in embodiments of the present invention are described below.
FIG. 1A is a schematic diagram of a shooting scenario according to an embodiment of the present invention;
FIG. 1B is a schematic diagram of another shooting scenario according to an embodiment of the present invention;
FIG. 2 is a schematic diagram of a system architecture according to an embodiment of the present invention;
FIG. 3 is a schematic structural diagram of an electronic apparatus according to an embodiment of the present invention;
FIG. 4 is a schematic flowchart of an application control method according to an embodiment of the present invention;
FIG. 5 is a schematic diagram of an application scenario of a display according to an embodiment of the present invention;
FIG. 6 is a schematic diagram of an application scenario of another display according to an embodiment of the present invention;
FIG. 7 is a schematic diagram of an application scenario of a camera according to an embodiment of the present invention;
FIG. 8 is a schematic diagram of an application scenario of another display according to an embodiment of the present invention;
FIG. 9 is a schematic diagram of an application scenario of another display according to an embodiment of the present invention;
FIG. 10A to FIG. 10C are a schematic diagram of an application scenario of split-screen display;
FIG. 11 is a schematic diagram of an application scenario of one-hand operating according to an embodiment of the present invention;
FIG. 12 is a schematic flowchart of another application control method according to an embodiment of the present invention;
FIG. 13 is a schematic diagram of another shooting scenario according to an embodiment of the present invention;
FIG. 14 is a schematic diagram of another shooting scenario according to an embodiment of the present invention;
FIG. 15 is a schematic structural diagram of another electronic apparatus according to an embodiment of the present invention; and
FIG. 16 is a schematic structural diagram of another electronic apparatus according to an embodiment of the present invention.

### DESCRIPTION OF EMBODIMENTS

The following describes the embodiments of the present invention with reference to the accompanying drawings in the embodiments of the present invention.

The embodiments of the present invention provide an electronic apparatus. The electronic apparatus is configured to perform an application control method. The electronic apparatus may include a handheld device (for example, a mobile phone, a tablet computer, or a palmtop computer) having a wireless communication function, a wearable device (for example, a smartwatch (such as iWatch), a smart band, or a pedometer), a workshop remote control device, or the like.

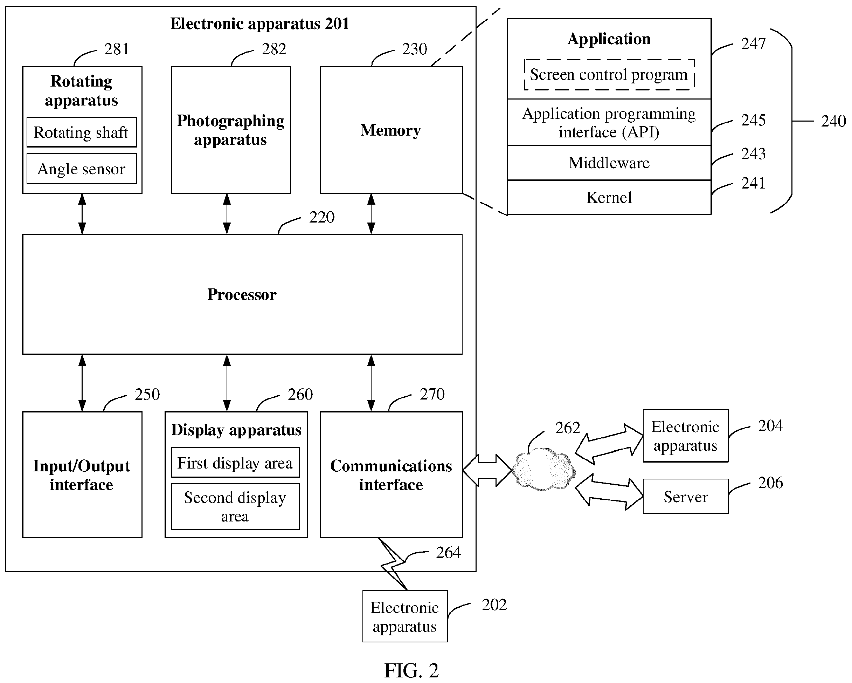

FIG. 2 is a schematic structural diagram of an electronic apparatus 201 according to an embodiment of the present invention. The electronic apparatus 201 may include a processor 220, a memory 230, an input/output interface 250, a display 260, and a communications interface 270. The foregoing elements: the processor 220, the memory 230, the input/output interface 250, the display 260, and the communications interface 270, may be connected to each other through a bus 210, to implement a circuit for supporting transmission and communication (for example, transmission of a control message and/or data) between the elements. In this embodiment of this application, at least one of the foregoing elements may be omitted, or another element may be added to the electronic apparatus 201.

The processor 220 may include at least one of a central processing unit (CPU), an application processor (AP), or a communications processor (CP). The processor 220 may perform an operation or data processing related to control and/or communication of at least one of the elements of the electronic apparatus 201.

The memory 230 may include a volatile memory and/or a non-volatile memory. The memory 230 may store an instruction or data related to at least one of the other elements of the electronic apparatus 201. According to the embodiments of this disclosure, the memory 230 may store software and/or a program 240. The program 240 may include, for example, a kernel 241, middleware 243, an application programming interface (API) 245, and/or an application 247. The application 247 may specifically include a screen control program. The screen control program is used to define a control policy for the display 260 (which includes a first display area and a second display area). For example, the display 260 is controlled to display an interface of an application in both the first display area and the second display area under a specific condition, or display an interface of an application in either of the first display area and the second display area under a specific condition.

At least a part of the kernel 241, the middleware 243, or the API 245 may be referred to as an operating system (OS).

The kernel 241 may control or manage a system resource (such as the processor 220 or the memory 230) used to perform an operation or a function of another program (such as the middleware 243, the API 245, or the application 247). In addition, the kernel 241 may provide an interface, and the interface allows the middleware 243, the API 245, or the application 247 to access each element of the electronic apparatus 201 to control or manage the system resource.

The middleware 243 may act as an intermediary that enables the API 245 or the application 247 to communicate and exchange data with the kernel 241.

In addition, the middleware 243 may process, in a priority order, one or more task requests received from the application 247. For example, the middleware 243 may allocate, to at least one application 247, a priority of using the system resource (for example, the processor 220 or the memory 230) of the electronic apparatus 201. For example, the middleware 243 may process the one or more task requests based on the priority allocated to the at least one application, to perform scheduling or load balancing for the one or more task requests.

The API 245 is an interface for allowing the application 247 to control a function provided by the kernel 241 or the middleware 243, and may include at least one interface or function (for example, an instruction) used for file control, display control, image processing, character control, and the like.

The input/output interface 250 may be configured to transmit, to another element of the electronic apparatus 201, an instruction or data that is input from a user or another external apparatus. In addition, the input/output interface 250 may output, to the user or the another external apparatus, an instruction or data received from the another element of the electronic apparatus 201.

The display 260 may include, for example, a liquid crystal display (LCD), a light-emitting diode (LED) display, an organic light-emitting diode (OLED) display, a micro-electro-mechanical system (MEMS) display, or an electronic paper display. The display 260 may present various content (for example, texts, images, videos, icons, symbols, or similar objects) to the user. The display 260 may include a touchscreen, and may receive a touch, a gesture, an approach operation, or a hover operation that is input from an electronic pen or a part of the body of the user. In addition, in this embodiment of this application, the display 260 is a flexible display (screen), and can be folded. For example, each cascading structure of a cover (Cover) and a panel (Panel) in the foldable flexible display is made of a foldable flexible material. The display 260 includes at least two display areas, which may be respectively referred to as a first display area and a second display area. A rotating apparatus 281 exists between the first display area and the second display area. The rotating apparatus 281 may include a rotating shaft and an angle sensor. Both the first display area and the second display area may rotate along the rotating shaft of the rotating apparatus 281. An included angle between the first display area and the second display area may be a straight angle in a rotation process, so that it seems that the first display area and the second display area form a complete planar display area. The complete planar display area may be used to display an interface of the electronic apparatus 201. In the rotation process, the included angle between the first display area and the second display area may alternatively be an angle greater than 0 degrees and less than 360 degrees. After rotation of a specific angle, it can be clearly seen that the two display areas are not on a same plane. It may be understood that the angle sensor may collect some technical parameters in the rotation process, for example, the angle between the first display area and the second display area in the rotation process. Optionally, an IMU (including functions of a gyroscope and an accelerometer) may be installed in each of the first display area and the second display area, so that horizontal angles of the first display area and the second display area can be separately measured. Then, the included angle between the first display area and the second display area can be obtained through difference calculation.

A photographing apparatus 282 may include one camera (camera) or a plurality of cameras (for example, one front-facing camera and one rear-facing camera, or a plurality of front-facing cameras). The camera may alternatively be a group of camera modules. For example, when there is a front-facing camera and a rear-facing camera, and the first display area and the second display area are on a same plane, a shooting direction of the front-facing camera may be basically consistent with a display direction of the display 260, and a shooting direction of the rear-facing camera may be basically opposite to the display direction of the display 260.

The communications interface 270 may establish communication between the electronic apparatus 201 and an external apparatus (for example, a first external electronic apparatus 202, a second external electronic apparatus 204, or a server 206). For example, the communications interface 270 may be connected to a network 262 through wireless communication or wired communication, to communicate with the external apparatus (for example, the second external electronic apparatus 204 or the server 206). The wireless communication may use at least one of cellular communications protocols, such as long term evolution (LTE), long term evolution-advanced (LTE-A), code division multiple access (CDMA), wideband code division multiple access (WCDMA), universal mobile telecommunications system (UMTS), wireless broadband (WiBro), or global system for mobile communications (GSM). The wireless communication may include, for example, short-range communication 264. The short-range communication may include at least one of wireless fidelity (Wi-Fi), Bluetooth, near field communication (NFC), magnetic stripe transmission (MST), or GNSS.

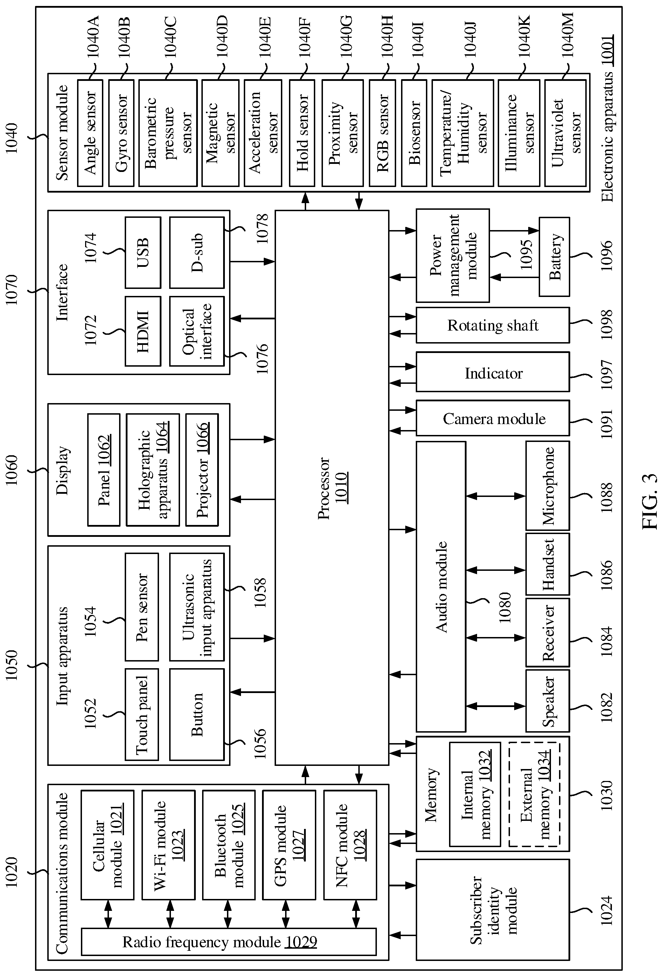

FIG. 3 is a schematic structural diagram of another electronic apparatus according to an embodiment of the present invention. The electronic apparatus may include a part or all of the electronic apparatus 201 shown in FIG. 2. The electronic apparatus 1001 may include at least one processor (for example, an AP) 1010, a communications module 1020, a subscriber identity module (SIM) 1024, a memory 1030, a sensor module 1040, an input apparatus 1050, a display 1060, an interface 1070, an audio module 1080, a camera module 1091, a power management module 1095, a battery 1096, an indicator 1097, and a rotating shaft 1098.

The processor 1010 may run an operating system or an application program to control a plurality of hardware or software elements connected to the processor 1010, and may process various data and perform an operation. The processor 1010 may be implemented as, for example, a system on chip (SoC). According to this embodiment of this disclosure, the processor 1010 may further include a graphics processing unit (GPU) and/or an image signal processor. The processor 1010 may include at least some of the elements shown in FIG. 3 (for example, a cellular module 1021). The processor 1010 may load an instruction or data received from at least one of other elements (for example, a non-volatile memory) onto a volatile memory to process the instruction or the data, and may store various data in the non-volatile memory.

The communications module 1020 may have a same or similar configuration as the communications interface 270 in FIG. 2. The communications module 1020 may include, for example, the cellular module 1021, a Wi-Fi module 1023, a Bluetooth (BT) module 1025, a GPS module 1027, an NFC module 1028, and a radio frequency (RF) module 1029.

The cellular module 1021 may provide, for example, a voice call service, a video call service, a text message service, or an internet service through a communications network. The cellular module 1021 may use the subscriber identity module 1024 (for example, a SIM card) to identify and verify the electronic apparatus 1001 in the communications network. The cellular module 1021 may perform at least some of functions that may be provided by the processor 1010. The cellular module 1021 may include a communication processor (CP).

Each of the Wi-Fi module 1023, the Bluetooth module 1025, the GPS module 1027, and the NFC module 1028 may include, for example, a processor configured to process data sent/received by the module. According to some different embodiments of this disclosure, at least some (for example, two or more) of the cellular module 1021, the Wi-Fi module 1023, the Bluetooth module 1025, the GPS module 1027, and the NFC module 1028 may be included in a single integrated chip (IC) or an IC package.

The RF module 1029 may, for example, send/receive a communication signal (for example, an RF signal). The RF module 1029 may include, for example, a transceiver, a power amplifier module (PAM), a frequency filter, a low noise amplifier (LNA), and an antenna. According to another embodiment of this disclosure, at least one of the cellular module 1021, the Wi-Fi module 1023, the Bluetooth module 1025, the GPS module 1027, or the NFC module 1028 may send/receive an RF signal through a separate RF module. The SIM 1024 may include, for example, a card including the subscriber identity module and/or an embedded SIM, and may include unique identification information (for example, an integrated circuit card identity (ICCID)) or user information (for example, an international mobile subscriber identity (IMSI)).

The memory 1030 (for example, the memory 230) may include, for example, an internal memory 1032 or an external memory 1034. The internal memory 1032 may include at least one of the following: a volatile memory (for example, a dynamic random access memory (DRAM), a static random access memory (SRAM), or a synchronous dynamic random access memory (SDRAM)), and a non-volatile memory (for example, a one-time programmable read-only memory (OTPROM), a programmable read-only memory (PROM), an erasable programmable read-only memory (EPROM), an electrically erasable programmable read-only memory (EEPROM), a mask read-only memory, a flash read-only memory, a flash memory (for example, a NAND flash memory or a NOR flash memory), a hard disk drive, or a solid-state drive (SSD)).

The external memory 1034 may include a flash memory drive, such as a compact flash (CF), a secure digital (SD) card, a micro SD, a mini SD, an extreme card (xD), a multimedia card (MMC), or a memory stick. The external memory 1034 may be operably and/or physically connected to the electronic apparatus 1001 through various interfaces.

For example, the sensor module 1040 may measure a physical quantity or detect an operating status of the electronic apparatus 1001, to convert measured or detected information into an electrical signal. The sensor module 1040 may include, for example, at least one of an angle sensor 1040A (which is configured to detect an angle between a first display area and a second display area), a gyro sensor 1040B, a barometric pressure sensor 1040C, a magnetic sensor 1040D, an acceleration sensor 1040E, a hold sensor 1040F, a proximity sensor 1040G, a color sensor 1040H (for example, a red/green/blue (RGB) sensor), a biosensor 1040I, a temperature/humidity sensor 1040J, an illuminance sensor 1040K, or an ultraviolet (UV) sensor 1040M. Additionally or alternatively, the sensor module 1040 may include, for example, an olfaction sensor (such as an electronic nose sensor), an electromyography (EMG) sensor, an electroencephalogram (EEG) sensor, an electrocardiogram (ECG) sensor, an infrared (IR) sensor, an iris recognition sensor, and/or a fingerprint sensor. The sensor module 1040 may further include a control circuit configured to control at least one sensor included in the sensor module 1040. In some different embodiments of this disclosure, the electronic apparatus 1001 may further include a processor. The processor is used as a part of the processor 1010 or separately controls the sensor module 1040, to control the sensor module 1040 when the processor 1010 is in a sleep state.

The display 1060 (for example, the display 260) may include a panel 1062, a holographic apparatus 1064, or a projector 1066. The panel 1062 may have a same or similar structure as the display 260 in FIG. 2. The panel 1062 may be, for example, flexible, transparent, or wearable. The panel 1062 and a touch panel 1052 may be integrated into a single module. The holographic apparatus 1064 may display a stereoscopic image in space by virtue of a light interference phenomenon. The projector 1066 may project light onto a screen to display an image. According to this embodiment of this disclosure, the display 1060 may further include a control circuit configured to control the panel 1062, the holographic apparatus 1064, or the projector 1066. In addition, when the display 1060 is a flexible display (screen), the display 1060 can be folded. In this case, the display 1060 includes at least two display areas, which may be respectively referred to as the first display area and the second display area. The rotating shaft 1098 exists between the first display area and the second display area. Both the first display area and the second display area may rotate along the rotating shaft 1098. An included angle between the first display area and the second display area may be a straight angle in a rotation process, so that it seems that the first display area and the second display area form a complete planar display area. The complete planar display area may be used to display an interface of the electronic apparatus 1001. In the rotation process, the included angle between the first display area and the second display area may alternatively be an angle greater than 0 degrees and less than 360 degrees. After rotation of a specific angle, it can be clearly seen that the two display areas are not on a same plane. It may be understood that the angle sensor 1040A may collect some technical parameters in the process of rotation along the rotating shaft 1098, for example, the angle between the first display area and the second display area in the rotation process.

The input apparatus 1050 may include, for example, the touch panel 1052, a (digital) pen sensor 1054, a button 1056, or an ultrasonic input apparatus 1058. The touch panel 1052 may use at least one of a capacitive sensing method, a resistive sensing method, an infrared sensing method, and an ultrasonic sensing method. The touch panel 1052 may further include a control circuit. The touch panel 1052 may further include a tactile layer, to provide a tactile feedback for a user.

The (digital) pen sensor 1054 may include, for example, a recognition chip that serves as a part of the touch panel or that is separate. The button 1056 may include, for example, a physical button, an optical button, or a keyboard. The ultrasonic input apparatus 1058 may sense an ultrasonic wave generated by an input tool through a microphone 1088 to identify data corresponding to the sensed ultrasonic wave.

The interface 1070 may include, for example, an HDMI 1072, a USB 1074, an optical interface 1076, or a D-subminiature (D-sub) interface 1078. For example, the interface 1070 may be included in the communications interface 270 shown in FIG. 2. Additionally or alternatively, the interface 1070 may include, for example, a mobile high-definition link (MHL) interface, an SD card interface/a multimedia card (MMC) interface, or an infrared data association (IrDA) interface.

For example, the audio module 1080 may convert a sound into an electrical signal, or may convert an electrical signal into a sound. At least some of elements of the audio module 1080 may be included in the input/output interface 250 shown in FIG. 2. The audio module 1080 may process sound information that is input or output through a speaker 1082, a receiver 1084, a headset 1086, or the microphone 1088.

For example, the camera module 1091 is an apparatus configured to shoot a still image or video. According to this embodiment of this disclosure, the camera module 1091 may include at least one image sensor (for example, a front sensor or a rear sensor), a lens, an image signal processor (ISP), or a flash (for example, an LED or a xenon lamp). The camera module 1091 may include one camera (camera) or a plurality of cameras (for example, one front-facing camera and one rear-facing camera, or a plurality of front-facing cameras). The camera may alternatively be a group of camera modules. For example, when there is a front-facing camera and a rear-facing camera, and the first display area and the second display area are on a same plane, a shooting direction of the front-facing camera may be basically consistent with a display direction of the display 1060, and a shooting direction of the rear-facing camera may be basically opposite to the display direction of the display 1060.

The power management module 1095 may manage a power supply of the electronic apparatus 1001. According to this embodiment of this disclosure, the power management module 1095 may include a power management integrated circuit (PMIC), a charger integrated circuit (IC), or a battery meter. The PMIC may use a wired charging method and/or a wireless charging method. For example, the wireless charging method may include a magnetic resonance method, a magnetic induction method, an electromagnetic method, or the like. An additional circuit, for example, a coil circuit, a resonant circuit, or a rectifier, used for wireless charging may be further included. The battery meter may measure, for example, a remaining capacity of the battery 1096 and a voltage, a current, or a temperature of the battery during charging. The battery 1096 may include, for example, a rechargeable battery and/or a solar cell.

The indicator 1097 may display a specific state of the electronic apparatus 1001 or a component (for example, the processor 1010) of the electronic apparatus 1001, for example, a startup state, a messaging state, or a charging state. Although not shown, the electronic apparatus 1001 may include a processing apparatus (for example, the GPU) configured to support mobile television. The processing apparatus configured to support the mobile television may process media data according to a standard such as digital multimedia broadcasting (DMB), digital video broadcasting (DVB), or MediaFLOTM.

Each element described herein may be configured with one or more components, and a name of the element may be changed based on a type of the electronic apparatus. In the embodiments of this disclosure, the electronic apparatus may include at least one of the elements described herein, and some elements may be omitted, or another additional element may be added. In addition, some elements of the electronic apparatus may be combined into one entity, so that functions of the elements may be performed in a manner that is the same as that used before the combination.

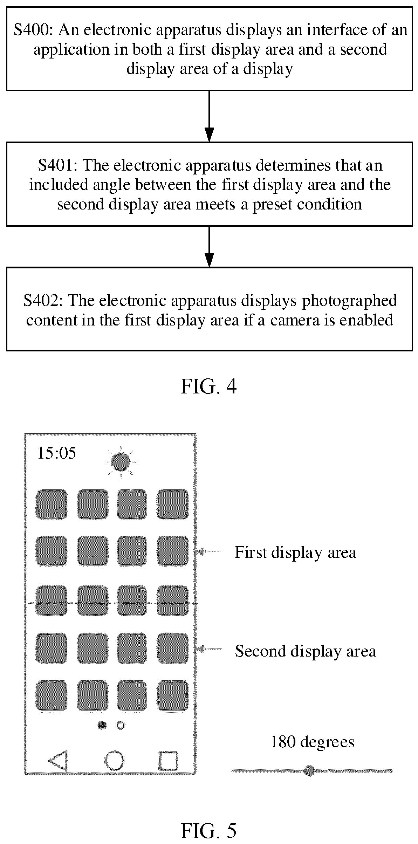

FIG. 4 shows an application control method according to an embodiment of the present invention. The method may be applied to the foregoing electronic apparatus. The electronic apparatus includes a first part and a second part that are flexibly connected. The first part includes a first display area and a camera (namely, a photographing apparatus or a camera module). The second part includes a second display area. The first display area and the second display area form a display of the electronic apparatus. The method includes but is not limited to the following steps.

Step S400: The electronic apparatus displays an interface of an application in both the first display area and the second display area of the display.

Specifically, both the first display area and the second display area may rotate along a rotating shaft. An included angle between the first display area and the second display area varies with a rotation degree. When the included angle between the first display area and the second display area does not fall outside a preset range, the first display area and the second display area may look like a complete display area. Therefore, the first display area and the second display area may be used to jointly display an interface of one application. To be specific, some content in the interface of the application is displayed in the first display area, and the other content in the interface of the application is displayed in the second display area. An absolute value of a difference between any angle in the preset angle range and 180 degrees is less than a preset threshold. The preset threshold may be set based on an actual requirement. For example, the preset threshold may be predefined as 4. In this case, the preset range is an angle range from 176 degrees to 184 degrees. For another example, the preset threshold may be predefined as 0. In this case, the preset range is 180 degrees. FIG. 5 is a schematic diagram of a scenario in which the first display area and the second display area are used to jointly display a home screen of the electronic apparatus when the included angle between the first display area and the second display area is 180 degrees.

Step S401: The electronic apparatus determines that the included angle between the first display area and the second display area meets a preset condition.

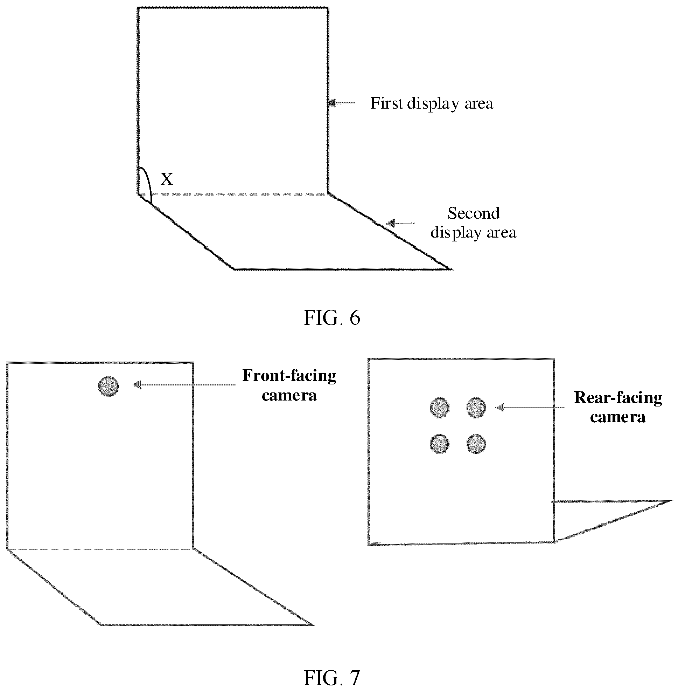

Specifically, an angle sensor on the electronic apparatus may detect the included angle between the first display area and the second display area in real time, to determine, based on a detection result, whether the included angle meets the preset condition. Specifically, whether the included angle X between the first display area and the second display area falls outside the preset angle range may be determined. FIG. 6 shows the included angle X between the first display area and the second display area. For example, it is assumed that the preset angle range is set to 176 degrees to 184 degrees. If a currently detected included angle between the first display area and the second display area is 195 degrees, it may be determined that the included angle between the first display area and the second display area falls outside the preset angle range, that is, the preset condition is met.

Step S402: The electronic apparatus displays photographed content in the first display area if the camera is enabled.

Specifically, the camera is configured on the electronic apparatus. The electronic apparatus may include a front-facing camera, or include a rear-facing camera, or include a front-facing camera and a rear-facing camera. FIG. 7 shows a case in which the electronic apparatus includes both a front-facing camera and a rear-facing camera. The electronic apparatus needs to learn whether the camera is enabled. Optionally, when both the front-facing camera and the rear-facing camera are included, as long as one camera is enabled, it is determined that the camera is enabled. When only one camera (namely, the front-facing camera or the rear-facing camera) is included, if the camera is enabled, it is determined that the camera is enabled.

It should be noted that the electronic apparatus may determine, before performing step S401, after performing step S401, or when performing step S401, whether the camera is enabled.

In this embodiment of this application, the electronic apparatus displays the photographed content in the first display area when determining that the camera is enabled. In this case, the second part is configured to stabilize the electronic apparatus, the first part is configured to flip along (the rotating shaft on) a side connected to the second part to adjust a display angle of the first display area, and the photographed content includes content that is photographed by another device and that is received by the electronic apparatus and/or content photographed by the camera.

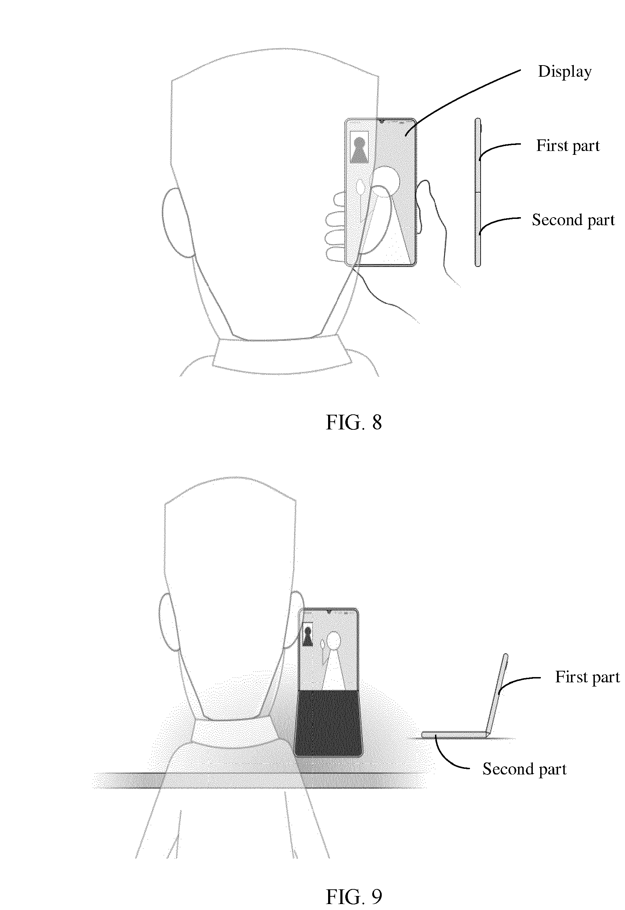

For example, it is assumed that the electronic apparatus is a mobile phone. As shown in FIG. 8, the mobile phone includes a first part and a second part. When an included angle between a first display area in the first part and a second display area in the second part is 180 degrees, a display including both the first display area and the second display area is used to display a video chat interface. As shown in FIG. 9, when a user folds the first part or the second part and the included angle meets a preset condition, the video chat interface is displayed in the first display area. The video chat interface may include video information sent by a chat friend, and may further include video information shot by a camera of the user. The second display area may not display any useful information, for example, may be screen-off, or may display a black screen, a white screen, or some information that is not very important. In this case, the user may place the electronic apparatus in a specific location (for example, on a table). The second part is in contact with the location to stabilize the electronic apparatus. In this process, the user may keep the second part still and rotate the first part, to adjust the display angle of the first display area, and adjust a shooting angle of the camera in the first part.

According to the invention, the method further includes step S404. In examples not falling under the scope of the claimed invention, the method may further include step S403. S403 and S404 are as follows:

Step S403: The electronic apparatus separately displays interfaces of different applications in the first display area and the second display area if the camera is not enabled.

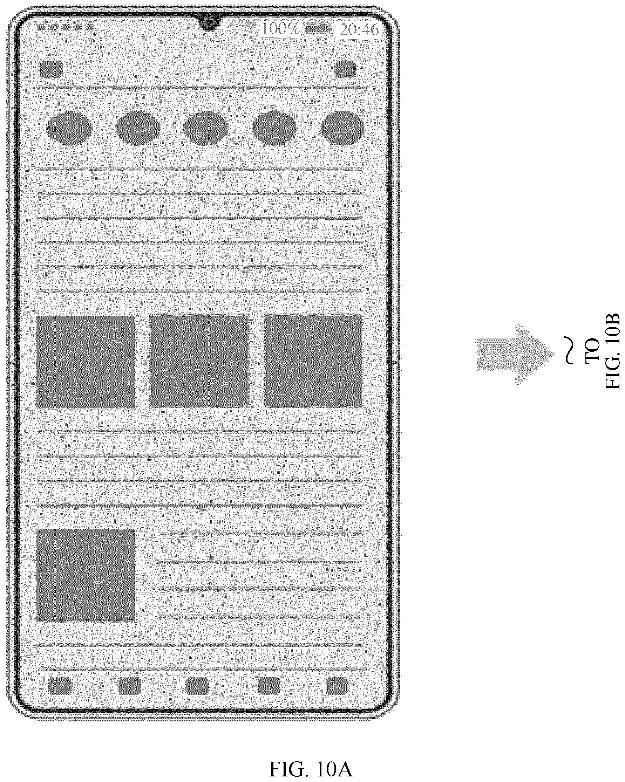

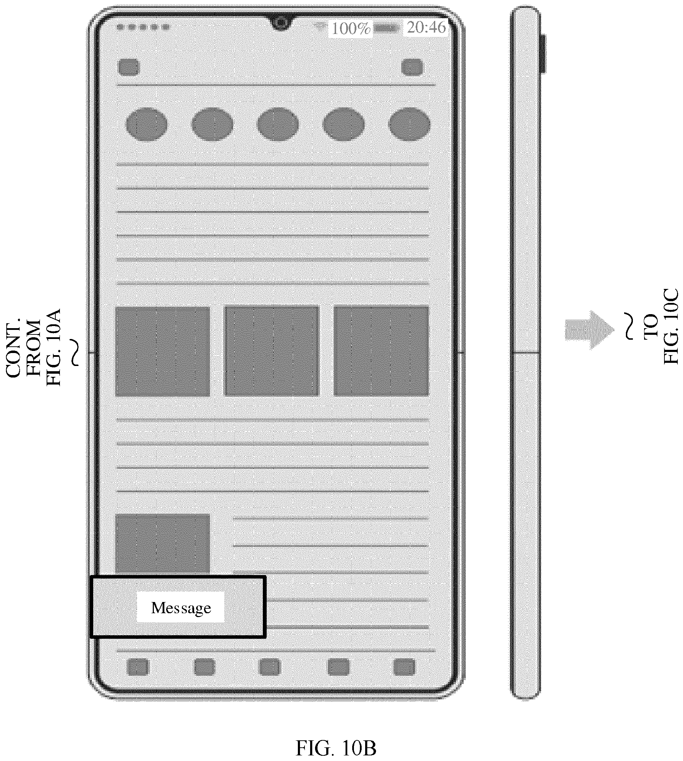

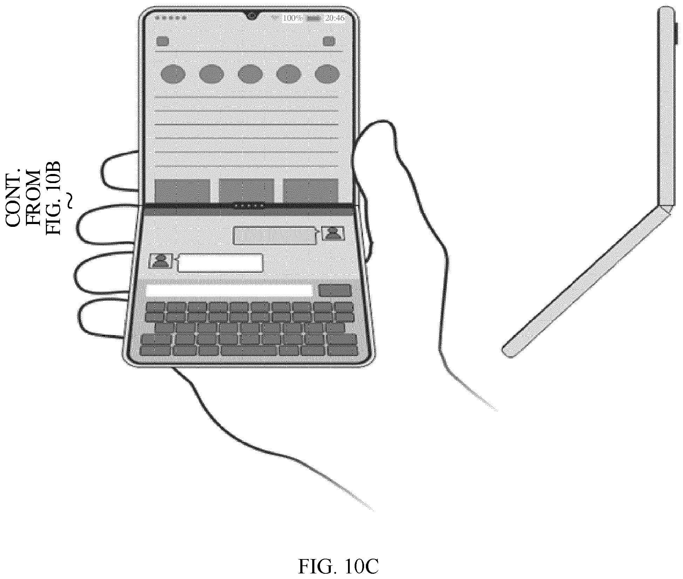

In other words, if the camera is not enabled, and the included angle between the first display area and the second display area meets the preset condition, a split-screen display function is enabled. To be specific, an interface of an application is displayed in the first display area, and a display interface of another application is displayed in the second display area. For example, a news content interface is displayed in the first display area, and a chat interface is displayed in the second display area. For ease of understanding, the following uses a specific application scenario as an example with reference to FIG. 10A to FIG. 10C. When the user browses news information on a news client by using the electronic apparatus, a chat message reminder pops up at the lower left corner of the display of the electronic apparatus. In this case, the user folds the electronic apparatus, so that the included angle between the first display area and the second display area meets the preset condition. In this case, if the camera is not enabled, the news information is displayed in the first display area, and a chat interface is displayed in the second display area. Optionally, the news information that is originally displayed in both the first display area and the second display area is now displayed in only the first display area. Therefore, the first display area definitely cannot completely display the news information. In this case, a scroll bar in the first display area may be slid to display content that has not been displayed and hide content that has been displayed.

Optionally, the two applications displayed in a split-screen manner may be two applications for which an association relationship is established in advance, or two applications last used by the user. In addition, the first display area and the second display area are connected through an "arc surface", and the "arc surface" is tangent to each of the two display areas. Tangents between the "arc surface" and the two display areas each may be used as a dividing line of the display areas, or a line that is in the center of the "arc surface" and that is in parallel with the "tangents" may be defined as a dividing line of the display areas.

Step S404: If the camera is not enabled, the electronic apparatus displays an interface of an application in the second display area, and skips displaying an interface of an application in the first display area.

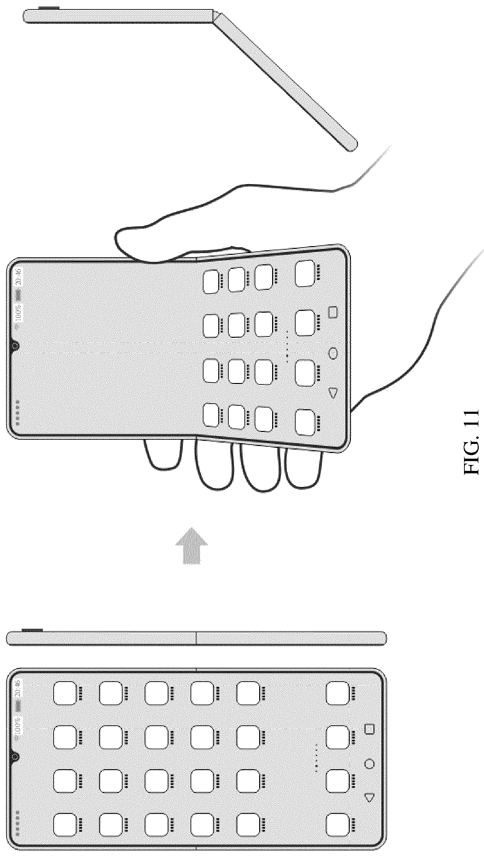

In other words, if the camera is not enabled, and the included angle between the first display area and the second display area meets the preset condition, a one-hand operating function is enabled. To be specific, the interface of the application is displayed in the second display area, and the first display area does not display any useful information, for example, may be screen-off, or may display a black screen or a white screen. For ease of understanding, the following uses a specific application scenario as an example with reference to FIG. 11. When the user browses icons on a home screen by using the electronic apparatus, the user folds the electronic apparatus, so that the included angle between the first display area and the second display area meets the preset condition. In this case, if the camera is not enabled, the icons on the home screen are displayed in the second display area, and a blank screen is displayed in the first display area. Optionally, the home screen that is originally displayed in both the first display area and the second display area is now displayed in only the second display area. The icons on the home screen may be scaled down in a same proportion and then displayed in the second display area. Alternatively, some icons on the home screen are first displayed in the second display area, and then the user may slide a scroll bar in the second display area to display an icon that is on the home screen and that has not been displayed and hide an icon that is on the home screen and that has been displayed.

In examples not falling under the scope of the claimed invention, how the electronic apparatus performs displaying when the camera is enabled may not be specifically limited.

In the method shown in FIG. 4, when the included angle between the first display area and the second display area meets the preset condition, and the camera is enabled, the second part in which the second display area is located is used as a stabilization holder, the first display area is used as an area for displaying the photographed content, and the user may rotate the first part in which the first display area is located, to adjust the display angle of the first display area. Therefore, in a scenario in which a camera needs to be used, for example, a video chat scenario or a video live broadcast scenario, the user does not need to hold the electronic apparatus for a long time, and an independent holder does not need to be separately configured to stabilize the electronic apparatus, so that the electronic apparatus is used more efficiently and conveniently. In addition, when the included angle between the first display area and the second display area meets the preset condition, and the camera is not enabled, the split-screen display function or the one-hand operating function is enabled. In other words, in this embodiment of this application, with reference to the foregoing two conditions: whether the included angle can meet the preset condition and whether the camera is enabled, the electronic apparatus is flexibly controlled to implement a corresponding service. This enriches flexibility and diversity of controlling the electronic apparatus, and improves user experience.

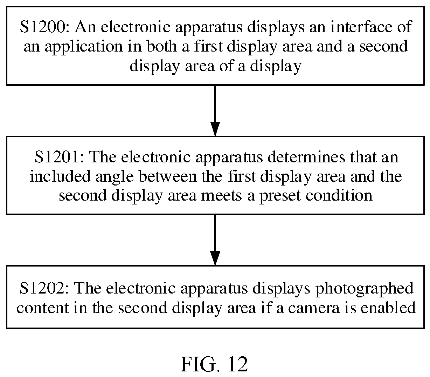

FIG. 12 shows an application control method according to an embodiment of the present invention. The method may be applied to the foregoing electronic apparatus. The electronic apparatus includes a first part and a second part that are flexibly connected. The first part includes a first display area and a camera (namely, a photographing apparatus or a camera module). The second part includes a second display area. The first display area and the second display area form a display of the electronic apparatus. The method includes but is not limited to the following steps.

Step S1200: The electronic apparatus displays an interface of an application in both the first display area and the second display area of the display.

Specifically, both the first display area and the second display area may rotate along a rotating shaft. An included angle between the first display area and the second display area varies with a rotation degree. When the included angle between the first display area and the second display area does not fall outside a preset range, the first display area and the second display area may look like a complete display area. Therefore, the first display area and the second display area may be used to jointly display an interface of one application. To be specific, some content in the interface of the application is displayed in the first display area, and the other content in the interface of the application is displayed in the second display area. An absolute value of a difference between any angle in the preset angle range and 180 degrees is less than a preset threshold. The preset threshold may be set based on an actual requirement. For example, the preset threshold may be predefined as 4. In this case, the preset range is an angle range from 176 degrees to 184 degrees. For another example, the preset threshold may be predefined as 0. In this case, the preset range is 180 degrees. FIG. 5 is a schematic diagram of a scenario in which the first display area and the second display area are used to jointly display a home screen of the electronic apparatus when the included angle between the first display area and the second display area is 180 degrees.

Step S1201: The electronic apparatus determines that the included angle between the first display area and the second display area meets a preset condition.

Specifically, an angle sensor on the electronic apparatus may detect the included angle between the first display area and the second display area in real time, to determine, based on a detection result, whether the included angle meets the preset condition. Specifically, whether the included angle X between the first display area and the second display area falls outside the preset angle range may be determined. FIG. 6 shows the included angle X between the first display area and the second display area. For example, it is assumed that the preset angle range is set to 176 degrees to 184 degrees. If a currently detected included angle between the first display area and the second display area is 195 degrees, it may be determined that the included angle between the first display area and the second display area falls outside the preset angle range, that is, the preset condition is met.

Step S1202: The electronic apparatus displays photographed content in the second display area if the camera is enabled.

Specifically, the camera is configured on the electronic apparatus. The electronic apparatus may include a front-facing camera, or include a rear-facing camera, or include a front-facing camera and a rear-facing camera. FIG. 7 shows a case in which the electronic apparatus includes both a front-facing camera and a rear-facing camera. The electronic apparatus needs to learn whether the camera is enabled. Optionally, when both the front-facing camera and the rear-facing camera are included, as long as one camera is enabled, it is determined that the camera is enabled. When only one camera (namely, the front-facing camera or the rear-facing camera) is included, if the camera is enabled, it is determined that the camera is enabled.

It should be noted that the electronic apparatus may determine, before performing step S1201, after performing step S1201, or when performing step S1201, whether the camera is enabled.

In this embodiment of this application, the electronic apparatus displays the photographed content in the second display area when determining that the camera is enabled. In this case, the first part is configured to flip along (the rotating shaft on) a side connected to the second part to adjust a shooting angle of the camera, and the photographed content is content photographed by the camera.

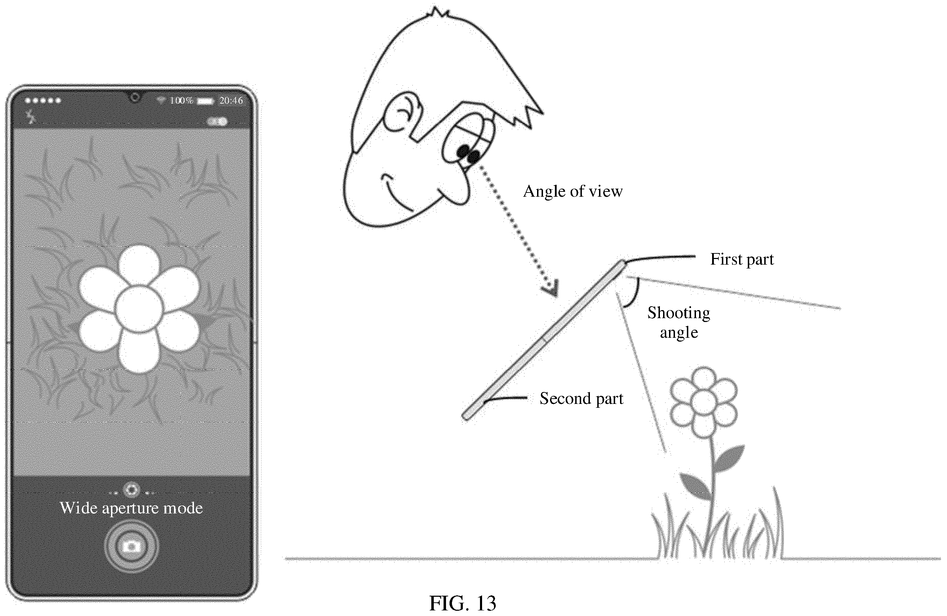

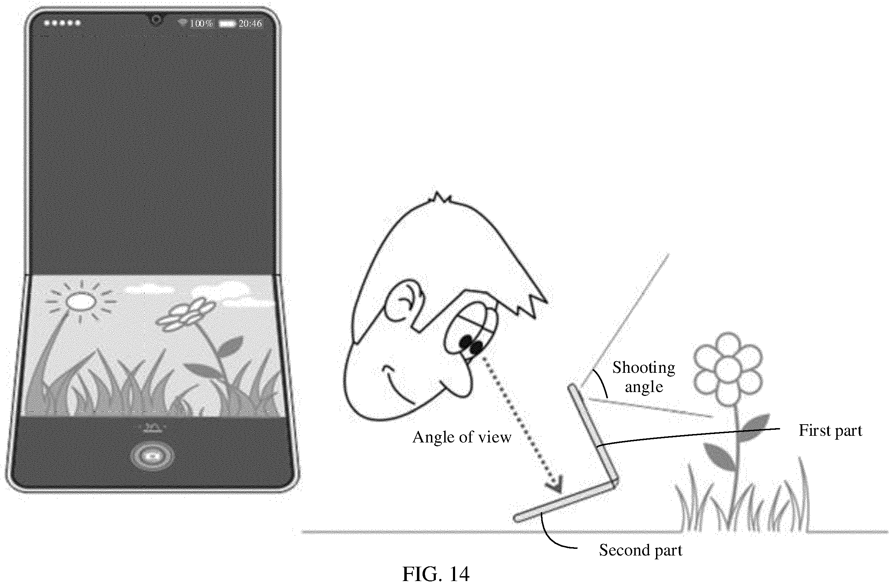

For example, it is assumed that the electronic apparatus is a mobile phone. As shown in FIG. 13, the mobile phone includes a first part and a second part. When an included angle between a first display area in the first part and a second display area in the second part is 180 degrees, a display including both the first display area and the second display area is used to display an image shot by the camera. The shot image seen by a user is shown in a left part in FIG. 13. As shown in FIG. 14, when the user folds the first part or the second part and the included angle meets a preset condition, a shot image is displayed in the second display area. The first display area may not display any useful information, for example, may be screen-off, or may display a black screen, a white screen, or some information that is not important. The shot image seen by the user is shown in a left part in FIG. 14. In this process, the user may keep the second part still and rotate the first part, to adjust the shooting angle of the camera. In this way, some special-angle scenery can be photographed. Compared with those in the manner in FIG. 13, shooting angles are richer and operations are simpler.

According to the invention, the method further includes step S1204. In examples not falling under the scope of the claimed invention, the method may further include step S1203. S1203 and S1204 are as follows:

Step S1203: The electronic apparatus separately displays interfaces of different applications in the first display area and the second display area if the camera is not enabled.

In other words, if the camera is not enabled, and the included angle between the first display area and the second display area meets the preset condition, a split-screen display function is enabled. To be specific, an interface of an application is displayed in the first display area, and a display interface of another application is displayed in the second display area. For example, a news content interface is displayed in the first display area, and a chat interface is displayed in the second display area. For ease of understanding, the following uses a specific application scenario as an example with reference to FIG. 10A to FIG. 10C. When the user browses news information on a news client by using the electronic apparatus, a chat message reminder pops up at the lower left corner of the display of the electronic apparatus. In this case, the user folds the electronic apparatus, so that the included angle between the first display area and the second display area meets the preset condition. In this case, if the camera is not enabled, the news information is displayed in the first display area, and a chat interface is displayed in the second display area. Optionally, the news information that is originally displayed in both the first display area and the second display area is now displayed in only the first display area. Therefore, the first display area definitely cannot completely display the news information. In this case, a scroll bar in the first display area may be slid to display content that has not been displayed and hide content that has been displayed.

Optionally, the two applications displayed in a split-screen manner may be two applications for which an association relationship is established in advance, or two applications last used by the user. In addition, the first display area and the second display area are connected through an "arc surface", and the "arc surface" is tangent to each of the two display areas. Tangents between the "arc surface" and the two display areas each may be used as a dividing line of the display areas, or a line that is in the center of the "arc surface" and that is in parallel with the "tangents" may be defined as a dividing line of the display areas.

Step S1204: If the camera is not enabled, the electronic apparatus displays an interface of an application in the second display area, and skips displaying an interface of an application in the first display area.

In other words, if the camera is not enabled, and the included angle between the first display area and the second display area meets the preset condition, a one-hand operating function is enabled. To be specific, the interface of the application is displayed in the first display area, and the second display area does not display any useful information, for example, may be screen-off, or may display a black screen or a white screen. For ease of understanding, the following uses a specific application scenario as an example with reference to FIG. 11. When the user browses icons on a home screen by using the electronic apparatus, the user folds the electronic apparatus, so that the included angle between the first display area and the second display area meets the preset condition. In this case, if the camera is not enabled, the icons on the home screen are displayed in the first display area, and a blank screen is displayed in the second display area. Optionally, the home screen that is originally displayed in both the first display area and the second display area is now displayed in only the first display area. The icons on the home screen may be scaled down in a same proportion and then displayed in the first display area. Alternatively, some icons on the home screen are first displayed in the first display area, and then the user may slide a scroll bar in the first display area to display an icon that is on the home screen and that has not been displayed and hide an icon that is on the home screen and that has been displayed.

In examples not falling under the scope of the claimed invention, how the electronic apparatus performs displaying when the camera is enabled may not be specifically limited.

In the method shown in FIG. 12, when the included angle between the first display area and the second display area meets the preset condition, and the camera is enabled, the photographed content is displayed in the second display area, and no photographed content is displayed in the first display area, but the first part in which the first display area is located may be rotated to adjust the shooting angle of the camera. In this manner, a lot of special-angle scenery can be photographed, and operations are simple. In addition, when the camera is used to photograph the special-angle scenery, a display angle of the second display area may be adjusted to an angle at which the user is relatively comfortable to watch. Then, the angle is maintained. Subsequently, regardless of how the user adjusts the shooting angle of the camera, the user can watch photographed scenery at a relatively comfortable angle. This improves user experience. In addition, when the included angle between the first display area and the second display area meets the preset condition, and the camera is not enabled, the split-screen display function or the one-hand operating function is enabled. In other words, in this embodiment of this application, with reference to the foregoing two conditions: whether the included angle can meet the preset condition and whether the camera is enabled, the electronic apparatus is flexibly controlled to implement a corresponding service. This enriches flexibility and diversity of controlling the electronic apparatus, and improves user experience.

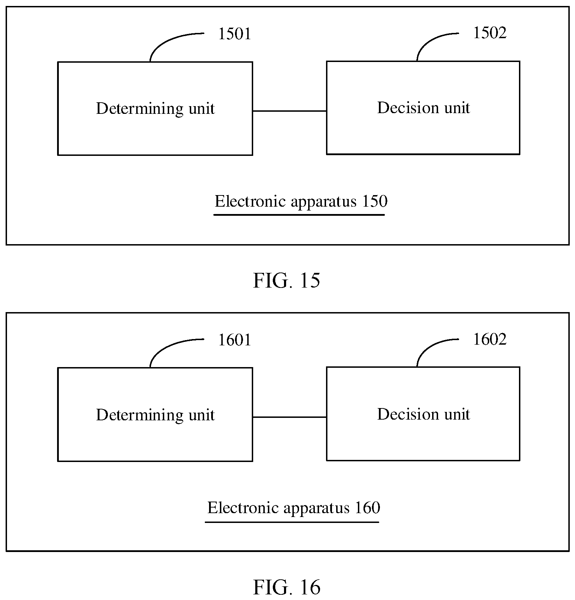

In FIG. 2 and FIG. 3, the electronic apparatus is described from a perspective of hardware. The following divides a structure of the electronic apparatus from a perspective of functions with reference to FIG. 15 and FIG. 16.

FIG. 15 is a schematic structural diagram of an electronic apparatus 150 according to an embodiment of the present invention. The electronic apparatus 150 includes a first part and a second part that are flexibly connected, the first part includes a first display area and a camera, the second part includes a second display area, and the first display area and the second display area form a display of the electronic apparatus 150. The electronic apparatus 150 includes a determining unit 1501 and a decision unit 1502.

The determining unit 1501 is configured to determine that an included angle between the first display area and the second display area meets a preset condition.

The decision unit 1502 is configured to display photographed content in the first display area if the camera is enabled, where the second part is configured to stabilize the electronic apparatus 150, the first part is configured to flip along a side connected to the second part to adjust a display angle of the first display area, and the photographed content includes content that is photographed by another device and that is received by the electronic apparatus 150 and/or content photographed by the camera.

That the determining unit 1501 is configured to determine that an included angle between the first display area and the second display area meets a preset condition is specifically:
determining that the included angle between the first display area and the second display area falls outside a preset angle range, where an absolute value of a difference between any angle in the preset angle range and 180 degrees is less than a preset threshold.

When the included angle between the first display area and the second display area does not fall outside the preset angle range, the first display area and the second display area are used to jointly perform a display task.

In a solution not falling under the scope of the claimed invention, the decision unit 1502 is further configured to separately display interfaces of different applications in the first display area and the second display area if the camera is not enabled.

In the solution according to the claimed invention, the decision unit 1502 is further configured to: if the camera is not enabled, display an interface of an application in the second display area, and skip displaying an interface of an application in the first display area.

Through running of the electronic apparatus 150, when the included angle between the first display area and the second display area meets the preset condition, and the camera is enabled, the second part in which the second display area is located is used as a stabilization holder, the first display area is used as an area for displaying the photographed content, and a user may rotate the first part in which the first display area is located, to adjust the display angle of the first display area. Therefore, in a scenario in which a camera needs to be used, for example, a video chat scenario or a video live broadcast scenario, the user does not need to hold the electronic apparatus 150 for a long time, and an independent holder does not need to be separately configured to stabilize the electronic apparatus 150, so that the electronic apparatus 150 is used more efficiently and conveniently. In addition, when the included angle between the first display area and the second display area meets the preset condition, and the camera is not enabled, a split-screen display function or a one-hand operating function is enabled. In other words, in this embodiment of this application, with reference to the foregoing two conditions: whether the included angle can meet the preset condition and whether the camera is enabled, the electronic apparatus 150 is flexibly controlled to implement a corresponding service. This enriches flexibility and diversity of controlling the electronic apparatus 150, and improves user experience.

An embodiment of the present invention provides an electronic apparatus 150. The electronic apparatus 150 includes a first part and a second part that are flexibly connected, the first part includes a first display area and a camera, the second part includes a second display area, and the first display area and the second display area form a display of the electronic apparatus 150. The electronic apparatus 150 includes a determining unit and a decision unit.

The determining unit is configured to determine that an included angle between the first display area and the second display area meets a preset condition.

The decision unit is configured to: if the camera is not enabled, display an interface of an application in the second display area, and skip displaying an interface of an application in the first display area.

That the determining unit is configured to determine that an included angle between the first display area and the second display area meets a preset condition is specifically:
determining that the included angle between the first display area and the second display area falls outside a preset angle range, where an absolute value of a difference between any angle in the preset angle range and 180 degrees is less than a preset threshold.

When the included angle between the first display area and the second display area does not fall outside the preset angle range, the first display area and the second display area are used to jointly perform a display task.

For specific implementation and beneficial effects of the electronic apparatus 150, refer to corresponding descriptions in the foregoing method embodiments.

FIG. 16 is a schematic structural diagram of an electronic apparatus 160 according to an embodiment of the present invention. The electronic apparatus 160 includes a first part and a second part that are flexibly connected, the first part includes a first display area and a camera, the second part includes a second display area, and the first display area and the second display area form a display of the electronic apparatus 160. The electronic apparatus 160 includes a determining unit 1601 and a decision unit 1602.

The determining unit 1601 is configured to determine that an included angle between the first display area and the second display area meets a preset condition.

The decision unit 1602 is configured to display photographed content in the second display area if the camera is enabled, where the first part is configured to flip along a side connected to the second part to adjust a shooting angle of the camera, and the photographed content is content photographed by the camera.

That the determining unit 1601 is configured to determine that an included angle between the first display area and the second display area meets a preset condition is specifically:
determining that the included angle between the first display area and the second display area falls outside a preset angle range, where an absolute value of a difference between any angle in the preset angle range and 180 degrees is less than a preset threshold.

When the included angle between the first display area and the second display area does not fall outside the preset angle range, the first display area and the second display area are used to jointly perform a display task.

In a solution not falling under the scope of the claimed invention, the decision unit 1602 is further configured to separately display interfaces of different applications in the first display area and the second display area if the camera is not enabled.

In a solution according to the claimed invention, the decision unit 1602 is further configured to: if the camera is not enabled, display an interface of an application in the second display area, and skip displaying an interface of an application in the first display area.

In the electronic apparatus 160, when the included angle between the first display area and the second display area meets the preset condition, and the camera is enabled, the photographed content is displayed in the second display area, and no photographed content is displayed in the first display area, but the first part in which the first display area is located may be rotated to adjust the shooting angle of the camera. In this manner, a lot of special-angle scenery can be photographed, and operations are simple. In addition, when the camera is used to photograph the special-angle scenery, a display angle of the second display area may be adjusted to an angle at which a user is relatively comfortable to watch. Then, the angle is maintained. Subsequently, regardless of how the user adjusts the shooting angle of the camera, the user can watch photographed scenery at a relatively comfortable angle. This improves user experience. In addition, when the included angle between the first display area and the second display area meets the preset condition, and the camera is not enabled, a split-screen display function or a one-hand operating function is enabled. In other words, in this embodiment of this application, with reference to the foregoing two conditions: whether the included angle can meet the preset condition and whether the camera is enabled, the electronic apparatus 160 is flexibly controlled to implement a corresponding service. This enriches flexibility and diversity of controlling the electronic apparatus 160, and improves user experience.

An embodiment of the present invention provides a schematic structural diagram of an electronic apparatus. The electronic apparatus includes a first part and a second part that are flexibly connected, the first part includes a first display area and a camera, the second part includes a second display area, and the first display area and the second display area form a display of the electronic apparatus. The electronic apparatus includes a determining unit and a decision unit.

The determining unit is configured to determine that an included angle between the first display area and the second display area meets a preset condition.

The decision unit is configured to: if the camera is not enabled, display an interface of an application in the second display area, and skip displaying an interface of an application in the first display area.

That the determining unit is configured to determine that an included angle between the first display area and the second display area meets a preset condition is specifically:
determining that the included angle between the first display area and the second display area falls outside a preset angle range, where an absolute value of a difference between any angle in the preset angle range and 180 degrees is less than a preset threshold.

When the included angle between the first display area and the second display area does not fall outside the preset angle range, the first display area and the second display area are used to jointly perform a display task.

For specific implementation and beneficial effects of the electronic apparatus, refer to corresponding descriptions in the foregoing method embodiments.

An embodiment of the present invention further provides a computer-readable storage medium. The computer-readable storage medium stores an instruction, and when the instruction is run on a processor, the method procedure shown in FIG. 4 or FIG. 12 is implemented.

An embodiment of the present invention further provides a computer program product. When the computer program product is run on a processor, the method procedure shown in FIG. 4 or FIG. 12 is implemented.

A person of ordinary skill in the art may understand that all or some of the procedures of the methods in the embodiments may be implemented by a computer program instructing relevant hardware. The program may be stored in a computer-readable storage medium. When the program is executed, the procedures of the methods in the embodiments may be performed. The foregoing storage medium includes any medium that can store program code, such as a ROM, a random access memory RAM, a magnetic disk, or an optical disc.

## Claims

1. An application control method, applied to an electronic apparatus, wherein the electronic apparatus comprises a first part and a second part that are flexibly connected, the first part comprises a first display area and a camera, the second part comprises a second display area, the first display area and the second display area form a display of the electronic apparatus, and the method comprises:
determining, by the electronic apparatus, that an included angle between the first display area and the second display area meets a preset condition;
determining, by the electronic apparatus, whether the camera is enabled; and
if the camera is enabled, displaying, by the electronic apparatus, photographed content in the first display area, wherein the second part is configured to stabilize the electronic apparatus, the first part is configured to flip along a side connected to the second part to adjust a display angle of the first display area, and the photographed content comprises content that is photographed by another device and that is received by the electronic apparatus and/or content photographed by the camera; and
if the camera is not enabled, displaying, by the electronic apparatus, an interface of an application in the second display area, and skipping displaying an interface of an application in the first display area;
wherein the determining, by the electronic apparatus, that an included angle between the first display area and the second display area meets a preset condition comprises:
determining that the included angle between the first display area and the second display area falls outside a preset angle range, wherein an absolute value of a difference between any angle in the preset angle range and 180 degrees is less than a preset threshold; and
wherein when the included angle between the first display area and the second display area does not fall outside the preset angle range, the first display area and the second display area are used to jointly perform a display task.

2. An application control method, applied to an electronic apparatus, wherein the electronic apparatus comprises a first part and a second part that are flexibly connected, the first part comprises a first display area and a camera, the second part comprises a second display area, the first display area and the second display area form a display of the electronic apparatus, and the method comprises:
determining, by the electronic apparatus, that an included angle between the first display area and the second display area meets a preset condition;
determining, by the electronic apparatus, whether the camera is enabled; and
if the camera is enabled, displaying, by the electronic apparatus, photographed content in the second display area, wherein the first part is configured to flip along a side connected to the second part to adjust a shooting angle of the camera, and the photographed content is content photographed by the camera; and
if the camera is not enabled, displaying, by the electronic apparatus, an interface of an application in the second display area, and skipping displaying an interface of an application in the first display area; and
wherein the determining, by the electronic apparatus, that an included angle between the first display area and the second display area meets a preset condition comprises:
determining that the included angle between the first display area and the second display area falls outside a preset angle range, wherein an absolute value of a difference between any angle in the preset angle range and 180 degrees is less than a preset threshold, and wherein when the included angle between the first display area and the second display area does not fall outside the preset angle range, the first display area and the second display area are used to jointly perform a display task.

3. An electronic apparatus, comprising a first part and a second part that are flexibly connected, wherein the first part comprises a first display area and a camera, the second part comprises a second display area, the first display area and the second display area form a display of the electronic apparatus, the electronic apparatus further comprises a processor and a memory, the processor is located in the first part or the second part, the memory is located in the first part or the second part, the memory is configured to store a program instruction, and the processor is configured to invoke the program instruction to perform the following operations:
determining that an included angle between the first display area and the second display area meets a preset condition;
determining whether the camera is enabled; and
if the camera is enabled, displaying photographed content in the first display area, wherein the second part is configured to stabilize the electronic apparatus, the first part is configured to flip along a side connected to the second part to adjust a display angle of the first display area, and the photographed content comprises content that is photographed by another device and that is received by the electronic apparatus and/or content photographed by the camera; and
if the camera is not enabled, display an interface of an application in the second display area, and skip displaying an interface of an application in the first display area; and
wherein the determining that an included angle between the first display area and the second display area meets a preset condition is specifically:
determining that the included angle between the first display area and the second display area falls outside a preset angle range, wherein an absolute value of a difference between any angle in the preset angle range and 180 degrees is less than a preset threshold, and wherein when the included angle between the first display area and the second display area does not fall outside the preset angle range, the first display area and the second display area are used to jointly perform a display task.

4. An application control electronic apparatus, wherein the electronic apparatus comprises a first part and a second part that are flexibly connected, the first part comprises a first display area and a camera, the second part comprises a second display area, the first display area and the second display area form a display of the electronic apparatus, the electronic apparatus further comprises a processor and a memory, the processor is located in the first part or the second part, the memory is located in the first part or the second part, the memory is configured to store a program instruction, and the processor is configured to invoke the program instruction to perform the following operations:
determining that an included angle between the first display area and the second display area meets a preset condition;
determining whether the camera is enabled; and
if the camera is enabled, displaying photographed content in the second display area, wherein the first part is configured to flip along a side connected to the second part to adjust a shooting angle of the camera, and the photographed content is content photographed by the camera; and
if the camera is not enabled, display an interface of an application in the second display area, and skip displaying an interface of an application in the first display area, and
wherein the determining that an included angle between the first display area and the second display area meets a preset condition is specifically:
determining that the included angle between the first display area and the second display area falls outside a preset angle range, wherein an absolute value of a difference between any angle in the preset angle range and 180 degrees is less than a preset threshold, and wherein when the included angle between the first display area and the second display area does not fall outside the preset angle range, the first display area and the second display area are used to jointly perform a display task.

5. A computer-readable storage medium, wherein the computer-readable storage medium stores a program instruction, and when the program instruction is run on a processor, the method according to any one of claims 1 to 2 is implemented.

6. A computer program product, wherein when the computer program product is run on a processor, the method according to any one of claims 1 to 2 is implemented.

## Patentansprüche

1. Anwendungssteuerungsverfahren, angewendet auf ein elektronisches Gerät, wobei das elektronische Gerät einen ersten Teil und einen zweiten Teil umfasst, die flexibel verbunden sind, der erste Teil einen ersten Anzeigebereich und eine Kamera umfasst, der zweite Teil einen zweiten Anzeigebereich umfasst, der erste Anzeigebereich und der zweite Anzeigebereich eine Anzeige des elektronischen Geräts bilden und das Verfahren Folgendes umfasst:
Bestimmen, durch das elektronische Gerät, dass ein eingeschlossener Winkel zwischen dem ersten Anzeigebereich und dem zweiten Anzeigebereich eine voreingestellte Bedingung erfüllt;
Bestimmen, durch das elektronische Gerät, ob die Kamera aktiviert ist; und,
wenn die Kamera aktiviert ist, Anzeigen, durch das elektronische Gerät, von fotografiertem Inhalt in dem ersten Anzeigebereich, wobei der zweite Teil dazu konfiguriert ist, das elektronische Gerät zu stabilisieren, der erste Teil dazu konfiguriert ist, entlang einer Seite, die mit dem zweiten Teil verbunden ist, zu kippen, um einen Anzeigewinkel des ersten Anzeigebereichs einzustellen, und der fotografierte Inhalt einen Inhalt, der durch eine andere Vorrichtung fotografiert und von der durch das elektronische Gerät empfangen wird, und/oder einen Inhalt, der durch die Kamera fotografiert wird, umfasst; und,
wenn die Kamera nicht aktiviert ist, Anzeigen, durch das elektronische Gerät, einer Schnittstelle einer Anwendung in dem zweiten Anzeigebereich, und Überspringen des Anzeigens einer Schnittstelle einer Anwendung in dem ersten Anzeigebereich;
wobei das Bestimmen, durch das elektronische Gerät, dass ein eingeschlossener Winkel zwischen dem ersten Anzeigebereich und dem zweiten Anzeigebereich eine voreingestellte Bedingung erfüllt, Folgendes umfasst:
Bestimmen, dass der eingeschlossene Winkel zwischen dem ersten Anzeigebereich und dem zweiten Anzeigebereich außerhalb eines voreingestellten Winkelbereichs liegt, wobei ein absoluter Wert einer Differenz zwischen einem beliebigen Winkel in dem voreingestellten Winkelbereich und 180 Grad kleiner als ein voreingestellter Schwellenwert ist; und
wobei, wenn der eingeschlossene Winkel zwischen dem ersten Anzeigebereich und dem zweiten Anzeigebereich nicht außerhalb des voreingestellten Winkelbereichs liegt, der erste Anzeigebereich und der zweite Anzeigebereich verwendet werden, um gemeinsam eine Anzeigeaufgabe durchzuführen.

2. Anwendungssteuerungsverfahren, angewendet auf ein elektronisches Gerät, wobei das elektronische Gerät einen ersten Teil und einen zweiten Teil umfasst, die flexibel verbunden sind, der erste Teil einen ersten Anzeigebereich und eine Kamera umfasst, der zweite Teil einen zweiten Anzeigebereich umfasst, der erste Anzeigebereich und der zweite Anzeigebereich eine Anzeige des elektronischen Geräts bilden und das Verfahren Folgendes umfasst:
Bestimmen, durch das elektronische Gerät, dass ein eingeschlossener Winkel zwischen dem ersten Anzeigebereich und dem zweiten Anzeigebereich eine voreingestellte Bedingung erfüllt;
Bestimmen, durch das elektronische Gerät, ob die Kamera aktiviert ist; und,
wenn die Kamera aktiviert ist, Anzeigen, durch das elektronische Gerät, von fotografiertem Inhalt in dem zweiten Anzeigebereich, wobei der erste Teil dazu konfiguriert ist, entlang einer Seite, die mit dem zweiten Teil verbunden ist, zu kippen, um einen Aufnahmewinkel der Kamera einzustellen, und der fotografierte Inhalt ein Inhalt ist, der durch die Kamera fotografiert wird; und,
wenn die Kamera nicht aktiviert ist, Anzeigen, durch das elektronische Gerät, einer Schnittstelle einer Anwendung in dem zweiten Anzeigebereich, und Überspringen des Anzeigens einer Schnittstelle einer Anwendung in dem ersten Anzeigebereich; und
wobei das Bestimmen, durch das elektronische Gerät, dass ein eingeschlossener Winkel zwischen dem ersten Anzeigebereich und dem zweiten Anzeigebereich eine voreingestellte Bedingung erfüllt,
Folgendes umfasst:
Bestimmen, dass der eingeschlossene Winkel zwischen dem ersten Anzeigebereich und dem zweiten Anzeigebereich außerhalb eines voreingestellten Winkelbereichs liegt, wobei ein absoluter Wert einer Differenz zwischen einem beliebigen Winkel in dem voreingestellten Winkelbereich und 180 Grad kleiner als ein voreingestellter Schwellenwert ist, und wobei, wenn der eingeschlossene Winkel zwischen dem ersten Anzeigebereich und dem zweiten Anzeigebereich nicht außerhalb des voreingestellten Winkelbereichs liegt, der erste Anzeigebereich und der zweite Anzeigebereich verwendet werden, um gemeinsam eine Anzeigeaufgabe durchzuführen.

3. Elektronisches Gerät, umfassend einen ersten Teil und einen zweiten Teil, die flexibel verbunden sind, wobei der erste Teil einen ersten Anzeigebereich und eine Kamera umfasst, der zweite Teil einen zweiten Anzeigebereich umfasst, der erste Anzeigebereich und der zweite Anzeigebereich eine Anzeige des elektronischen Geräts bilden, das elektronische Gerät ferner einen Prozessor und einen Speicher umfasst, der Prozessor in dem ersten Teil oder dem zweiten Teil angeordnet ist, der Speicher in dem ersten Teil oder dem zweiten Teil angeordnet ist, der Speicher dazu konfiguriert ist, eine Programmanweisung zu speichern, und der Prozessor dazu konfiguriert ist, die Programmanweisung aufzurufen, um die folgenden Operationen durchzuführen:
Bestimmen, dass ein eingeschlossener Winkel zwischen dem ersten Anzeigebereich und dem zweiten Anzeigebereich eine voreingestellte Bedingung erfüllt;
Bestimmen, ob die Kamera aktiviert ist; und,
wenn die Kamera aktiviert ist, Anzeigen von fotografiertem Inhalt in dem ersten Anzeigebereich, wobei der zweite Teil dazu konfiguriert ist, das elektronische Gerät zu stabilisieren, der erste Teil dazu konfiguriert ist, entlang einer Seite, die mit dem zweiten Teil verbunden ist, zu kippen, um einen Anzeigewinkel des ersten Anzeigebereichs einzustellen, und der fotografierte Inhalt einen Inhalt, der durch eine andere Vorrichtung fotografiert und von der durch das elektronische Gerät empfangen wird, und/oder einen Inhalt, der durch die Kamera fotografiert wird, umfasst; und,
wenn die Kamera nicht aktiviert ist, Anzeigen einer Schnittstelle einer Anwendung in dem zweiten Anzeigebereich, und Überspringen des Anzeigens einer Schnittstelle einer Anwendung in dem ersten Anzeigebereich; und
wobei das Bestimmen, dass ein eingeschlossener Winkel zwischen dem ersten Anzeigebereich und dem zweiten Anzeigebereich eine voreingestellte Bedingung erfüllt, insbesondere Folgendes ist:
Bestimmen, dass der eingeschlossene Winkel zwischen dem ersten Anzeigebereich und dem zweiten Anzeigebereich außerhalb eines voreingestellten Winkelbereichs liegt, wobei ein absoluter Wert einer Differenz zwischen einem beliebigen Winkel in dem voreingestellten Winkelbereich und 180 Grad kleiner als ein voreingestellter Schwellenwert ist, und wobei, wenn der eingeschlossene Winkel zwischen dem ersten Anzeigebereich und dem zweiten Anzeigebereich nicht außerhalb des voreingestellten Winkelbereichs liegt, der erste Anzeigebereich und der zweite Anzeigebereich verwendet werden, um gemeinsam eine Anzeigeaufgabe durchzuführen.

4. Elektronisches Gerät zur Anwendungssteuerung, wobei das elektronische Gerät einen ersten Teil und einen zweiten Teil umfasst, die flexibel verbunden sind, der erste Teil einen ersten Anzeigebereich und eine Kamera umfasst, der zweite Teil einen zweiten Anzeigebereich umfasst, der erste Anzeigebereich und der zweite Anzeigebereich eine Anzeige des elektronischen Geräts bilden, das elektronische Gerät ferner einen Prozessor und einen Speicher umfasst, der Prozessor in dem ersten Teil oder dem zweiten Teil angeordnet ist, der Speicher in dem ersten Teil oder dem zweiten Teil angeordnet ist, der Speicher dazu konfiguriert ist, eine Programmanweisung zu speichern, und der Prozessor dazu konfiguriert ist, die Programmanweisung aufzurufen, um die folgenden Operationen durchzuführen:
Bestimmen, dass ein eingeschlossener Winkel zwischen dem ersten Anzeigebereich und dem zweiten Anzeigebereich eine voreingestellte Bedingung erfüllt;
Bestimmen, ob die Kamera aktiviert ist; und,
wenn die Kamera aktiviert ist, Anzeigen von fotografiertem Inhalt in dem zweiten Anzeigebereich, wobei der erste Teil dazu konfiguriert ist, entlang einer Seite, die mit dem zweiten Teil verbunden ist, zu kippen, um einen Aufnahmewinkel der Kamera einzustellen, und der fotografierte Inhalt ein Inhalt ist, der durch die Kamera fotografiert wird; und,
wenn die Kamera nicht aktiviert ist, Anzeigen einer Schnittstelle einer Anwendung in dem zweiten Anzeigebereich, und Überspringen des Anzeigens einer Schnittstelle einer Anwendung in dem ersten Anzeigebereich, und
wobei das Bestimmen, dass ein eingeschlossener Winkel zwischen dem ersten Anzeigebereich und dem zweiten Anzeigebereich eine voreingestellte Bedingung erfüllt, insbesondere Folgendes ist:
Bestimmen, dass der eingeschlossene Winkel zwischen dem ersten Anzeigebereich und dem zweiten Anzeigebereich außerhalb eines voreingestellten Winkelbereichs liegt, wobei ein absoluter Wert einer Differenz zwischen einem beliebigen Winkel in dem voreingestellten Winkelbereich und 180 Grad kleiner als ein voreingestellter Schwellenwert ist, und wobei, wenn der eingeschlossene Winkel zwischen dem ersten Anzeigebereich und dem zweiten Anzeigebereich nicht außerhalb des voreingestellten Winkelbereichs liegt, der erste Anzeigebereich und der zweite Anzeigebereich verwendet werden, um gemeinsam eine Anzeigeaufgabe durchzuführen.

5. Computerlesbares Speichermedium, wobei das computerlesbare Speichermedium eine Programmanweisung speichert, und wenn die Programmanweisung auf einem Prozessor ausgeführt wird, wird das Verfahren gemäß einem der Ansprüche 1 bis 2 implementiert.

6. Computerprogrammprodukt, wobei, wenn das Computerprogrammprodukt auf einem Prozessor ausgeführt wird, das Verfahren gemäß einem der Ansprüche 1 bis 2 implementiert wird.

## Revendications

1. Procédé de commande d'application, appliqué à un appareil électronique, dans lequel l'appareil électronique comprend une première partie et une seconde partie qui sont connectées de manière flexible, la première partie comprend une première zone d'affichage et une caméra, la seconde partie comprend une seconde zone d'affichage, la première zone d'affichage et la seconde zone d'affichage forment un affichage de l'appareil électronique, et le procédé comprend :
le fait de déterminer, par l'appareil électronique, qu'un angle compris entre la première zone d'affichage et la seconde zone d'affichage satisfait une condition prédéfinie ;
le fait de déterminer, par l'appareil électronique, si la caméra est activée ; et
si la caméra est activée, l'affichage, par l'appareil électronique, du contenu photographié dans la première zone d'affichage, dans lequel la seconde partie est configurée pour stabiliser l'appareil électronique, la première partie est configurée pour basculer le long d'un côté connecté à la seconde partie pour ajuster un angle d'affichage de la première zone d'affichage, et le contenu photographié comprend du contenu qui est photographié par un autre dispositif et qui est reçu par l'appareil électronique et/ou du contenu photographié par la caméra ; et
si la caméra n'est pas activée, l'affichage, par l'appareil électronique, d'une interface d'une application dans la seconde zone d'affichage, et l'ignorance de l'affichage d'une interface d'une application dans la première zone d'affichage ;
dans lequel le fait de déterminer, par l'appareil électronique, qu'un angle compris entre la première zone d'affichage et la seconde zone d'affichage satisfait une condition prédéfinie comprend :
le fait de déterminer que l'angle compris entre la première zone d'affichage et la seconde zone d'affichage se situe en dehors d'une plage d'angles prédéfinie, dans lequel une valeur absolue d'une différence entre un quelconque angle dans la plage d'angles prédéfinie et 180 degrés est inférieure à un seuil prédéfini ; et
dans lequel lorsque l'angle compris entre la première zone d'affichage et la seconde zone d'affichage ne se situe pas en dehors de la plage d'angle prédéfinie, la première zone d'affichage et la seconde zone d'affichage sont utilisées pour réaliser conjointement une tâche d'affichage.

2. Procédé de commande d'application, appliqué à un appareil électronique, dans lequel l'appareil électronique comprend une première partie et une seconde partie qui sont connectées de manière flexible, la première partie comprend une première zone d'affichage et une caméra, la seconde partie comprend une seconde zone d'affichage, la première zone d'affichage et la seconde zone d'affichage forment un affichage de l'appareil électronique, et le procédé comprend :
le fait de déterminer, par l'appareil électronique, qu'un angle compris entre la première zone d'affichage et la seconde zone d'affichage satisfait une condition prédéfinie ;
le fait de déterminer, par l'appareil électronique, si la caméra est activée ; et
si la caméra est activée, l'affichage, par l'appareil électronique, du contenu photographié dans la seconde zone d'affichage, dans lequel la première partie est configurée pour basculer le long d'un côté connecté à la seconde partie pour ajuster un angle de prise de vue de la caméra, et le contenu photographié est un contenu photographié par la caméra ; et
si la caméra n'est pas activée, l'affichage, par l'appareil électronique, d'une interface d'une application dans la seconde zone d'affichage, et l'ignorance de l'affichage d'une interface d'une application dans la première zone d'affichage ; et
dans lequel le fait de déterminer, par l'appareil électronique, qu'un angle compris entre la première zone d'affichage et la seconde zone d'affichage satisfait une condition prédéfinie comprend :
le fait de déterminer que l'angle compris entre la première zone d'affichage et la seconde zone d'affichage se situe en dehors d'une plage d'angle prédéfinie, dans lequel une valeur absolue d'une différence entre un quelconque angle dans la plage d'angle prédéfinie et 180 degrés est inférieure à un seuil prédéfini, et dans lequel lorsque l'angle compris entre la première zone d'affichage et la seconde zone d'affichage ne se situe pas en dehors de la plage d'angle prédéfinie, la première zone d'affichage et la seconde zone d'affichage sont utilisées pour réaliser conjointement une tâche d'affichage.

3. Appareil électronique, comprenant une première partie et une seconde partie reliées de manière flexible, dans lequel la première partie comprend une première zone d'affichage et une caméra, la seconde partie comprend une seconde zone d'affichage, les première et seconde zones d'affichage forment un affichage de l'appareil électronique, l'appareil électronique comprend également un processeur et une mémoire, le processeur est situé dans la première partie ou la seconde partie, la mémoire est située dans la première partie ou la seconde partie, la mémoire est configurée pour stocker une instruction de programme, et le processeur est configuré pour appeler l'instruction de programme à réaliser les opérations suivantes :
le fait de déterminer qu'un angle compris entre la première zone d'affichage et la seconde zone d'affichage satisfait une condition prédéfinie ;
le fait de déterminer si la caméra est activée ; et
si la caméra est activée, l'affichage du contenu photographié dans la première zone d'affichage, dans lequel la seconde partie est configurée pour stabiliser l'appareil électronique, la première partie est configurée pour basculer le long d'un côté connecté à la seconde partie pour ajuster un angle d'affichage de la première zone d'affichage, et le contenu photographié comprend du contenu qui est photographié par un autre dispositif et qui est reçu par l'appareil électronique et/ou du contenu photographié par la caméra ; et
si la caméra n'est pas activée, l'affichage d'une interface d'une application dans la seconde zone d'affichage, et l'ignorance de l'affichage d'une interface d'une application dans la première zone d'affichage ; et
dans lequel le fait de déterminer qu'un angle compris entre la première zone d'affichage et la seconde zone d'affichage satisfait une condition prédéfinie est spécifiquement :
le fait de déterminer que l'angle compris entre la première zone d'affichage et la seconde zone d'affichage se situe en dehors d'une plage d'angle prédéfinie, dans lequel une valeur absolue d'une différence entre un quelconque angle dans la plage d'angle prédéfinie et 180 degrés est inférieure à un seuil prédéfini, et dans lequel lorsque l'angle compris entre la première zone d'affichage et la seconde zone d'affichage ne se situe pas en dehors de la plage d'angle prédéfinie, la première zone d'affichage et la seconde zone d'affichage sont utilisées pour réaliser conjointement une tâche d'affichage.

4. Appareil électronique de commande d'application, dans lequel l'appareil électronique comprend une première partie et une seconde partie reliées de manière flexible, la première partie comprend une première zone d'affichage et une caméra, la seconde partie comprend une seconde zone d'affichage, les première et seconde zones d'affichage forment un affichage de l'appareil électronique, l'appareil électronique comprend également un processeur et une mémoire, le processeur est situé dans la première partie ou la seconde partie, la mémoire est située dans la première partie ou la seconde partie, la mémoire est configurée pour stocker une instruction de programme, et le processeur est configuré pour appeler l'instruction de programme à réaliser les opérations suivantes :
le fait de déterminer qu'un angle compris entre la première zone d'affichage et la seconde zone d'affichage satisfait une condition prédéfinie ;
le fait de déterminer si la caméra est activée ; et
si la caméra est activée, l'affichage du contenu photographié dans la seconde zone d'affichage, dans lequel la première partie est configurée pour basculer le long d'un côté connecté à la seconde partie pour ajuster un angle de prise de vue de la caméra, et le contenu photographié est un contenu photographié par la caméra ; et
si la caméra n'est pas activée, l'affichage d'une interface d'une application dans la seconde zone d'affichage, et l'ignorance de l'affichage d'une interface d'une application dans la première zone d'affichage, et
dans lequel le fait de déterminer qu'un angle compris entre la première zone d'affichage et la seconde zone d'affichage satisfait une condition prédéfinie est spécifiquement :
le fait de déterminer que l'angle compris entre la première zone d'affichage et la seconde zone d'affichage se situe en dehors d'une plage d'angle prédéfinie, dans lequel une valeur absolue d'une différence entre un quelconque angle dans la plage d'angle prédéfinie et 180 degrés est inférieure à un seuil prédéfini, et dans lequel lorsque l'angle compris entre la première zone d'affichage et la seconde zone d'affichage ne se situe pas en dehors de la plage d'angle prédéfinie, la première zone d'affichage et la seconde zone d'affichage sont utilisées pour réaliser conjointement une tâche d'affichage.

5. Support de stockage lisible par ordinateur, dans lequel le support de stockage lisible par ordinateur stocke une instruction de programme ; et lorsque l'instruction de programme est exécutée sur un processeur, le procédé selon l'une quelconque des revendications 1 à 2 est mis en œuvre.

6. Produit de programme informatique, dans lequel lorsque le produit de programme informatique est exécuté sur un processeur, le procédé selon l'une quelconque des revendications 1 à 2 est mis en œuvre.
